# FASCICULE DE BREVET EUROPEEN

(11) **EP 0 953 434 B1**
(45) Date de publication et mention de la délivrance du brevet: **19.03.2003**
(21) Numéro de dépôt: 99107551.6
(22) Date de dépôt: 15.04.1999
(51) Int. Cl.: B29D 30/24, B29D 30/32

(54) **Tambour d'assemblage pour la fabrication de pneumatiques**
Reifenaufbautrommel
Tyre building drum

(30) Priorité: 28.04.1998 FR 9805698
(43) Date de publication de la demande: 03.11.1999
(73) Titulaire: Compagnie Générale des Etablissements MICHELIN-MICHELIN & CIE, 63040 Clermont-Ferrand Cedex 09 (FR)
(72) Inventeur: Cordaillat, Dominique, 63160 Billom (FR); Muhlhoff, Olivier, 63100 Clermont-Ferrand (FR); Panighel, Bruno, 63510 Aulnat (FR)
(74) Mandataire: Cohen, Sylvia

(56) Documents cités:
- EP-A- 0 481 805
- DE-B- 1 198 054
- PATENT ABSTRACTS OF JAPAN vol. 98, no. 12, 31 octobre 1998 (1998-10-31) & JP 10 180901 A (YOKOHAMA RUBBER), 7 juillet 1998 (1998-07-07) & JP 10 180901 A (YOKOHAMA RUBBER) 7 juillet 1998 (1998-07-07)

## Description

La présente invention concerne un procédé de fabrication de pneumatiques et un tambour d'assemblage, expansible radialement, permettant la mise en oeuvre du procédé.

L'invention concerne plus particulièrement la fabrication d'un pneumatique comprenant une armature de carcasse, au moins une tringle de renforcement dans chacun des bourrelets du pneumatique à l'intérieur desquels l'armature de carcasse forme un retournement, et dont les deux bourrelets ont des diamètres différents.

Il est clair que la réalisation de ce type de pneumatiques impose l'utilisation d'un tambour d'assemblage présentant lui-même des sites de réception des bourrelets de pneumatique de diamètres différents. Cependant, cette inégalité de diamètre des sites de réception peut engendrer des problèmes d'industrialisation et des difficultés à maîtriser la qualité et la fiabilité des pneumatiques obtenus.

En effet, il est important pour la qualité et la fiabilité du pneumatique de poser sur le tambour les produits constitutifs de l'armature de carcasse, tels que des nappes etc., de façon régulière à la fois en terme de géométrie, donc de centrage, et de tension dans les produits. Ceci paraît particulièrement difficile sur un tambour dans lequel les diamètres des sites de réception des bourrelets sont différents. Cependant, on peut imaginer que l'on réussisse à pallier ces difficultés en posant les différents produits à la main avec lenteur et application. Il est clair que cette solution n'est pas adaptable au contexte industriel.

Par ailleurs, la réalisation du retournement de l'armature de carcasse dans les bourrelets du pneumatique nécessite une mise en tension de l'armature de carcasse au niveaux des points autour desquels va s'effectuer la rotation de l'armature de carcasse, ce qui est difficilement envisageable simultanément sur deux sites de diamètres différents.

L'invention vise donc à pallier ces inconvénients.

Selon l'invention, le tambour d'assemblage ayant un corps monté sur un arbre central et présentant une surface de réception des produits à assembler, dont les extrémités ont des diamètres différents, comporte des moyens escamotables susceptibles de recouvrir l'extrémité de la surface de réception de plus petit diamètre, et des moyens d'expansion du tambour vers deux positions expansées distinctes.

Les moyens escamotables permettent, en effet, de créer lorsque cela est souhaité, une surface globale de réception des produits généralement cylindrique et les moyens d'expansion assurent grâce aux deux positions d'expansion du tambour la possibilité de mise en tension des produits sur chacun des sites de diamètres différents.

L'invention concerne également un procédé de fabrication d'un pneumatique, qui comporte les étapes suivantes :
- utiliser une première surface ayant des extrémités de diamètres différents,
- déplacer vers ladite première surface une deuxième surface de diamètre sensiblement identique à l'extrémité de plus grand diamètre de la première surface pour recouvrir l'extrémité de plus petit diamètre de la première surface et ainsi créer une surface globale de réception généralement cylindrique,
- déposer une armature de carcasse sur ladite surface globale,
- déposer un élément annulaire métallique ou caoutchouteux respectivement sur chacune des extrémités de l'armature de carcasse,
- escamoter la deuxième surface et réaliser une expansion de la première surface vers une première position expansée dans laquelle l'extrémité de plus petit diamètre de ladite première surface vient au contact de l'armature de carcasse avec une légère tension,
- retourner chaque extrémité de l'armature de carcasse respectivement autour de l'élément annulaire correspondant et réaliser une nouvelle expansion, de la première surface vers une deuxième position expansée distincte de la première.

Avantageusement, l'expansion de la première surface est supérieure ou égale à la différence de diamètre existant entre les deux extrémités de ladite première surface.

D'autres caractéristiques et avantages de l'invention apparaîtront à la lecture d'un exemple de réalisation de l'invention en référence au dessin annexé dans lequel :
- la figure 1 est une représentation perspective partiellement en coupe d'un tambour conforme à l'invention,
- la figure 2 est une coupe axiale du tambour représenté à la figure 1 dans trois configurations différentes : en haut en position rétractée du tambour, virole avancée, en bas à droite en position intermédiaire du tambour et en bas à gauche en position expansée du tambour,
- la figure 3 est une coupe radiale du tambour selon la ligne III de la figure 2,
- la figure 4 est une représentation schématique du vérin représenté sur la figure 3,
- les figures 5A à 5F sont des représentations schématique en coupe radiale illustrant les différentes phases de fonctionnement d'une came d'une couronne du tambour,
- les figures 6A à 6H sont des représentations schématiques en coupe axiale partielle illustrant les différentes phases de la fabrication d'un pneumatique conformément à l'invention.

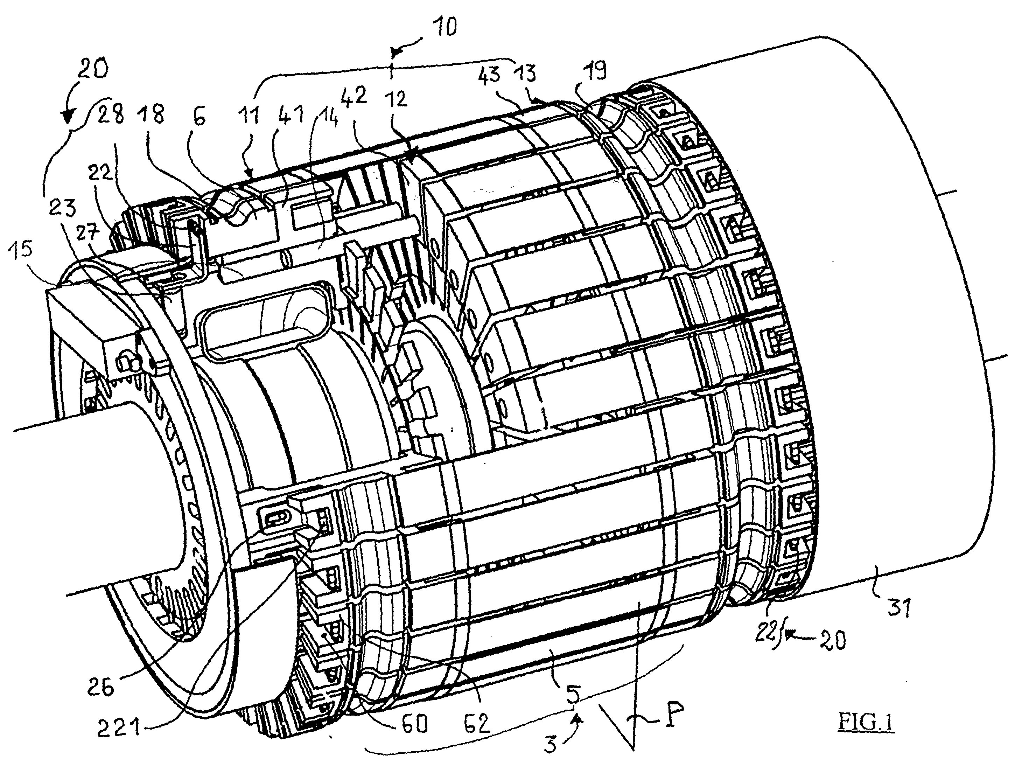

Selon la figure 1, le tambour 1 d'assemblage, expansible radialement, comprend un corps 10 monté sur un arbre central 2 et présentant une surface 3 de réception des produits à assembler.

Le corps 10 comprend deux demi-cylindres 11 et 13 déplaçables axialement autour de l'arbre central 2 afin de régler l'écartement des tringles du pneumatique à réaliser, les deux demi-cylindres 11 et 13 étant séparés par une couronne centrale 12 fixe axialement par rapport à l'arbre central 2.

Les demi-cylindres 11 et 13 ainsi que la couronne 12 sont constitués par une pluralité de segments respectivement 41, 43 et 42 juxtaposés circonférentiellement autour de l'arbre central 2, les segments 41, 42 et 43 étant alignés. Pour assurer la coordination du corps 10, chacun des segments 41 et 43 est relié au segment 42 en vis-à-vis au moyen d'une tige 14 qui traverse le segment 42 et dont les extrémités sont montées coulissantes respectivement dans des alésages 15 portées par les segments 41 et 43. Afin de permettre au tambour 1 d'atteindre sa position expansée, les segments 41, 42, 43 sont mobiles radialement sous l'action de deux chambres d'expansion 17 disposées respectivement sous lesdits segments 41 et 43, ces chambres étant gonflables. Les segments 41 et 43 entraînent dans leur mouvement radial les segments 42 de la couronne 12 par l'intermédiaire des tiges 14.

Des plaquettes 5 sont fixées par des vis non représentées sur les segments 42 de la couronne 12. Ces plaquettes 5 recouvrent au moins partiellement les segments 41 et 43 afin d'assurer une continuité entre la couronne 12 et les demi-cylindres 11 et 13 pour les produits à assembler quelle que soit la position axiale des demi-cylindres. La couronne 12 permet, de plus, d'assurer un maintien axial des plaquettes 5 lors de l'expansion radiale du tambour 1.

Les segments 41 et 43 portent à leurs extrémités latérales orientées extérieurement au tambour 1, des éléments supports respectivement 6 et 7 portant des gorges de réception 18 et 19 des tringles du pneumatique. Ces gorges de réception 18 et 19 présentent des diamètres différents, la gorge 19 présentant le plus faible diamètre dans cet exemple, ce qui permet la réalisation d'un pneumatique asymétrique, c'est-à-dire dont les deux bourrelets ont des diamètre différents.

La surface de réception 3 des produits à assembler est ainsi constituée par l'ensemble des surfaces extérieures des plaquettes 5, des zones des segments 41 et 43 non recouvertes par lesdites plaquettes et des surfaces extérieures des éléments supports 6 et 7.

Dans la suite de la description, on entend par le terme « doigt » un profilé de faible section.

Le tambour 1 choisi dans l'exemple décrit ici permet la réalisation d'un pneumatique asymétrique et dans lequel, de plus, le retournement de l'armature de carcasse dans chacun des bourrelets est disposé entre la tringle et l'armature de carcasse elle-même.

Ainsi, le tambour 1 porte à chacune des extrémités de la surface de réception 3, constituées respectivement par les surfaces extérieures des éléments supports 6 et 7, un dispositif de relevage 20. On décrira dans ce qui suit un seul dispositif de relevage, celui situé à gauche du plan P sur les figures, le deuxième étant identique mais avec un plus faible diamètre conformément à celui de la gorge concernée.

Le dispositif de relevage 20 comporte une pluralité de doigts de relevage 22, de section rectangulaire, répartis circulairement autour de l'arbre central 2 et s'étendant dans des directions radiales.

Ces doigts de relevage 22 sont disposés axialement extérieurement par rapport au centre du tambour 1, à la gorge de réception 18 à une faible distance de celle-ci et présentent respectivement une surface d'appui 221 des produits à assembler. Les doigts 22 sont montés à déplacement radial respectivement sur les segments 41, lesdits doigts 22 étant solidaires des segments 41 dans le mouvement d'expansion du tambour 1.

Ainsi, les doigts de relevage 22 sont déployables radialement vers l'extérieur du tambour 1 à partir d'une position de repos dans laquelle les surfaces d'appui 221 constituent un prolongement de la surface de réception 3, vers une position déployée dans laquelle les surfaces d'appui 221 constituent une surface cylindrique coaxiale à l'arbre central 2, de diamètre supérieur à celui de la surface 3. Ces doigts de relevage 22 offrent ainsi aux produits à assembler une pluralité de surfaces d'appui 221 discontinues et réparties circonférentiellement.
En position déployée, les zones d'extrémité des produits reposant sur les surfaces d'appui 221 sont donc soulevées par rapport à la partie centrale desdits produits reposant sur la surface de réception 3.

Avantageusement, les extrémités libres des doigts de relevage 22, c'est-à-dire radialement extérieures au tambour 1, sont constituées par un galet 28 monté libre en rotation autour d'un axe et qui porte ainsi la surface d'appui 221. Ce galet 28 permet d'éviter de créer des tensions au niveau des produits soulevés lors du déploiement des doigts de relevage 22 en assurant, dans cette phase, un contact « roulant » entre les doigts et les produits.

Chaque doigt 22 coulisse à l'intérieur d'une rainure 60 creusée dans l'élément support 6 correspondant. Plus précisément, l'extrémité libre de chaque élément support 6, située extérieurement au tambour 1 par rapport à la gorge de réception 18, présente une section en U vue en coupe par plan perpendiculaire à un rayon, les branches du U s'étendant dans des directions axiales. Cette disposition permet, au moment de la pose des produits dont les extrémités vont reposer sur les surfaces d'appui 221, les doigts de relevage 22 étant au repos, d'offrir aux dites extrémités une surface de réception étendue tout autour des surfaces 221. Les extrémités de ces produits sont alors supportées également par les surfaces extérieures 62 en U des extrémités des éléments support 6, ce qui contribue à l'obtention d'un positionnement correct sur le tambour 1 des produits.

L'extrémité radialement intérieure au tambour 1 de chaque doigt de relevage 22 porte un prolongement 222 axial. Chaque prolongement 222 est sur un vérin 23 d'actionnement dudit doigt logé dans un alésage porté par le segment 41 correspondant.

Le déplacement radial des doigts de relevage 22 est limité par la course des vérins d'actionnement 23 et le positionnement axial desdits doigts par rapport au corps 10 est réglable grâce aux lumières 26 portées par les prolongements 222 et permettant le passage de vis de fixation sur les vérins 23.
Afin d'assurer le retour en position de repos des doigts de relevage 22, une ceinture élastique de rappel 27 entoure l'ensemble des prolongements axiaux 222.

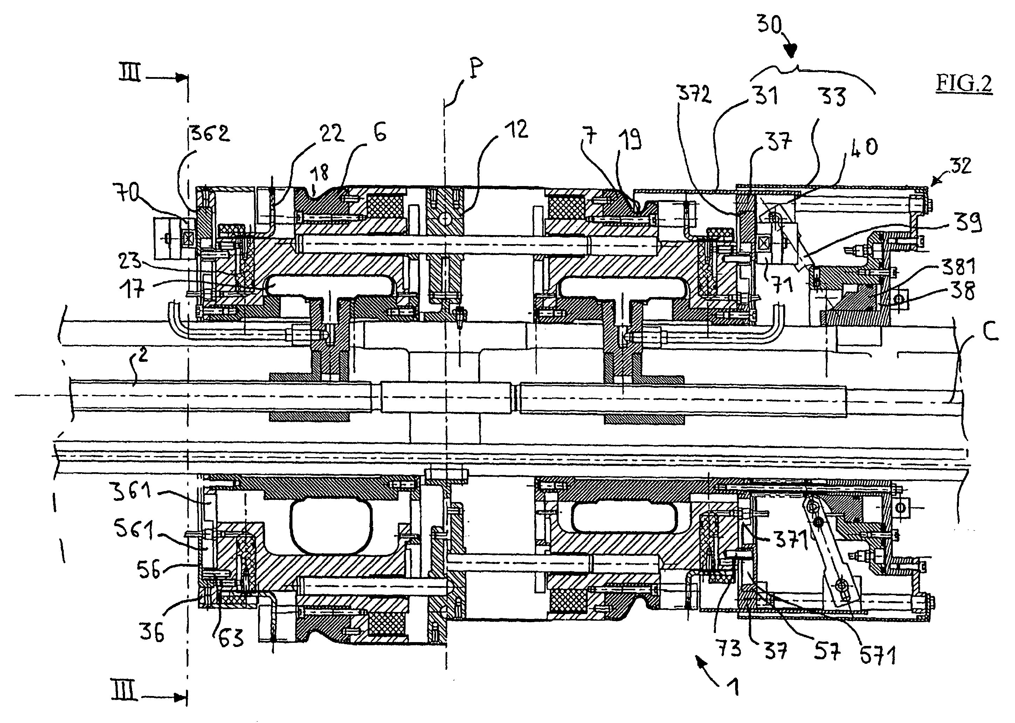

Par ailleurs, le tambour 1 porte des moyens escamotables 30 susceptibles de recouvrir l'extrémité de la surface de réception de plus petit diamètre, c'est-à-dire l'extrémité constituée par les éléments supports 7. Les moyens escamotables 30 comprennent une virole 31 dont le diamètre est sensiblement identique à celui des surfaces extérieures des plaquettes 5 et qui est montée, de façon translatable par rapport à l'arbre central 2, entre une position escamotée représentée à la figure 1 et une position de recouvrement des éléments supports 7 représentée sur le haut de la figure 2 par rapport au plan axial C. Il est clair que la présence de cette virole 31 permet de réaliser la pose de produits sur une surface globale généralement cylindrique donc en respectant la géométrie et la tension de pose desdits produits, on verra plus loin dans la description comment la position escamotée permet de conserver ces critères tout en ayant deux diamètres pour les bourrelets de pneumatique.

La virole 31 est portée par un support 32 monté sur l'arbre central 2. Le support 32 comporte un premier anneau extérieur 33, concentrique à l'arbre central 2, qui recouvre la virole 31 dans la position escamotée de cette dernière, la virole 31 coulissant dans la gorge 33 formée entre le premier anneau extérieur 33 et un deuxième anneau intérieur 37.

Le deuxième anneau 37 également concentrique à l'arbre central 2, est disposé à l'extrémité latérale du support 32 orientée vers le corps 10, et facilite le guidage de la virole 31.

A son extrémité latérale orientée à l'opposé du corps 10, le support 32 porte une chambre annulaire 38 concentrique à l'arbre central 2 à l'intérieur de laquelle coulisse axialement un piston 381 d'actionnement de la virole 31 relié à cette dernière par des bielles 39. La liaison de chaque bielle 39 avec la virole 31, est réalisée par le montage de ladite bielle sur un palier 40 solidaire de la virole 31 et qui assure son guidage en translation. On peut également envisager de déplacer les bielles 39 à l'aide d'une motorisation.

Par ailleurs, le tambour 1 porte des moyens d'expansion du tambour 1 vers deux positions expansées distinctes. Bien entendu, ces moyens d'expansion comprennent les chambres d'expansion 17 décrites précédemment.

Les moyens d'expansion comprennent également deux couronnes de commande 56 et 57 coaxiales à l'arbre central 2, montées de façon rotative par rapport à l'arbre central 2 axialement extérieurement au corps du tambour 1 à proximité de chacune des extrémités constituées respectivement par les segments 6 et 7 du corps 10. On pourrait utiliser une seule couronne, néanmoins on choisira préférentiellement d'en utiliser deux pour assurer un bon synchronisme d'expansion entre les deux extrémités du tambour.

Chacune des couronnes 56, 57 est, de plus, montée de façon rotative par rapport à des anneaux supports montés sur l'arbre central 2 et solidaires de ce dernier. Pour des raisons de compacité essentiellement, l'anneau support correspondant à la couronne 57 est constitué par le deuxième anneau intérieur 37 qui porte, à cet effet, un épaulement cylindrique intérieur 372 coopérant avec la couronne 57; la couronne 56 étant montée sur un anneau support 36 portant de façon symétrique un épaulement 362.

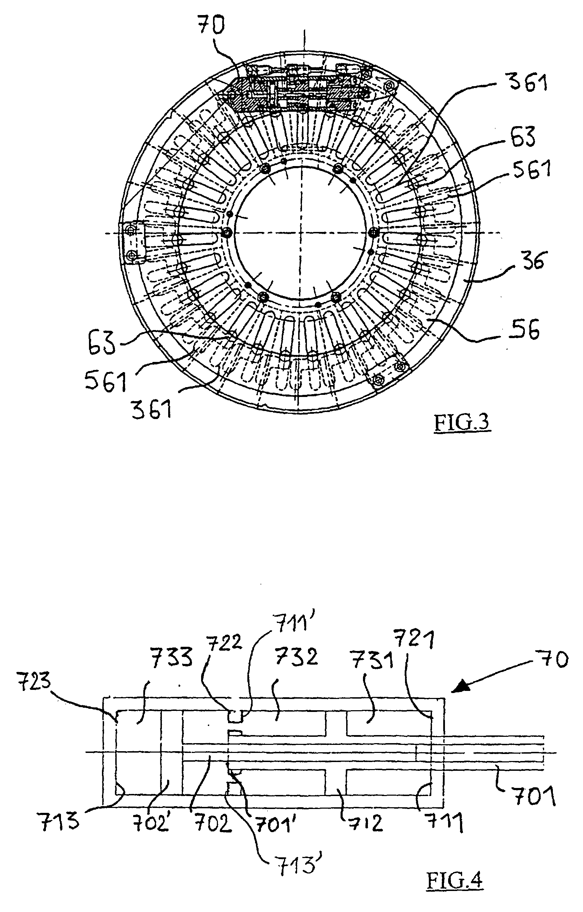

Chaque segment 6 (7) porte un pion 63 (73) d'engagement dans une came 561 (571) portée par la couronne de commande 56 (57) et, simultanément, dans une lumière 361 (362) orientée dans une direction radiale et portée par l'anneau support 36 (37) comme le montre la figure 3.
La position expansée accessible au tambour 1 est tributaire de la position angulaire de ladite couronne 56 (57). En effet, en fonction de la rotation de la couronne 56 (57) et donc de sa position angulaire et de celle de la came 561 (571), les pions 63 (73) ont une plage de positionnement radial différente, ce qui limite donc l'expansion radiale du tambour 1, les lumières 361 (362) assurant le guidage des pions 63 (73) et donc des segments 41 (43) dans des directions radiales.

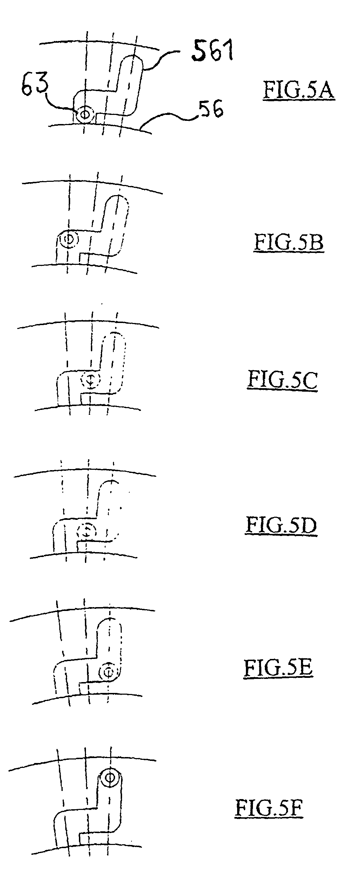

La rotation des couronnes 56 et 57 et le contrôle de leur position angulaire, sont réalisés par des vérins. Ces vérins étant identiques, on ne décrira que le vérin 70 représenté sur la figure 4 dans une position quelconque qui n'est pas l'une des positions stables dudit vérin.

Le vérin 70 comporte deux chambres délimitées par des butées 711 et 711' d'une part et 713 et 713' d'autre part. Le vérin 70 comporte également un piston 701 coulissant portant une extrémité de butée 701' et une tige 702 coulissant à l'intérieur du piston 701 avec une extrémité 702' qui coopère avec les butées 713 et 713'. Le piston 701 porte également une butée intermédiaire 712 coopérant avec la butée 711, la butée 701' coopère avec la butée 702'.

La chambre du vérin 70 est ainsi séparée en différents compartiments respectivement alimentés par un orifice d'alimentation en air :
- le compartiment 731 délimité entre la butée fixe 711 et la butée intermédiaire 712, alimenté par l'orifice 721,
- le compartiment 732 délimité entre la butée intermédiaire 712 et l'extrémité 702', alimenté par l'orifice 722,
- et le compartiment 733 délimité entre l'extrémité 702' et la butée fixe 713, alimenté par l'orifice 723.

Le vérin 70 a ainsi trois positions possibles correspondant aux trois positions angulaires de la couronne 56
- la position rentrée dans laquelle le vérin 70 est alimenté en air par le seul orifice 721, l'extrémité 702' étant en contact avec la butée fixe 713 et avec l'extrémité de butée 701'. Cette position correspondant à la position de la couronne 56 représentée sur les figures 5A et 5B,
- la position intermédiaire dans laquelle le vérin 70 est alimenté par les orifices 721 et 723, l'extrémité 702' étant en contact avec la butée fixe 713' et avec l'extrémité de butée 701'. Les différences de pression pneumatique dans les chambres sont telles que l'extrémité 702' reste en contact avec la butée fixe 713' lorsque l'extrémité 701' vient en appui sur l'extrémité 702'. Cette position correspond à la position de la couronne 56 représentée sur les figures 5C et 5D.
- enfin la position sortie dans laquelle le vérin 70 est alimenté par le seul orifice 722, l'extrémité 702' étant en contact avec la butée fixe 713 et la butée 712 avec la butée fixe 711. Cette position correspondant à la position de la couronne 56 représentée sur les figures 5E et 5F.

Sur les figures 5A à 5F, apparaissent la forme ressemblant à un Z de la came 561, les deux cames 561 et 571 étant identiques, et les différentes positions possibles pour le pion d'engagement 63
- la figure 5A correspond à la position rétractée du tambour 1 tel qu'il apparaît sur le haut de la figure 2,
- les figures 5B, 5C, 5D et 5E correspondent à une première position expansée du tambour 1 que l'on nommera "position intermédiaire" représentée sur la figure 2 en bas à droite,
- la figure 5F correspond à la position d'expansion maximale du tambour 1 que l'on nommera "position expansée" et qui est représentée sur la figure 2 en bas à gauche.

La position circonférentielle des couronnes 56 et 57 est commandée par respectivement des vérins 70 et 71. On peut également envisager un actionnement motorisé.

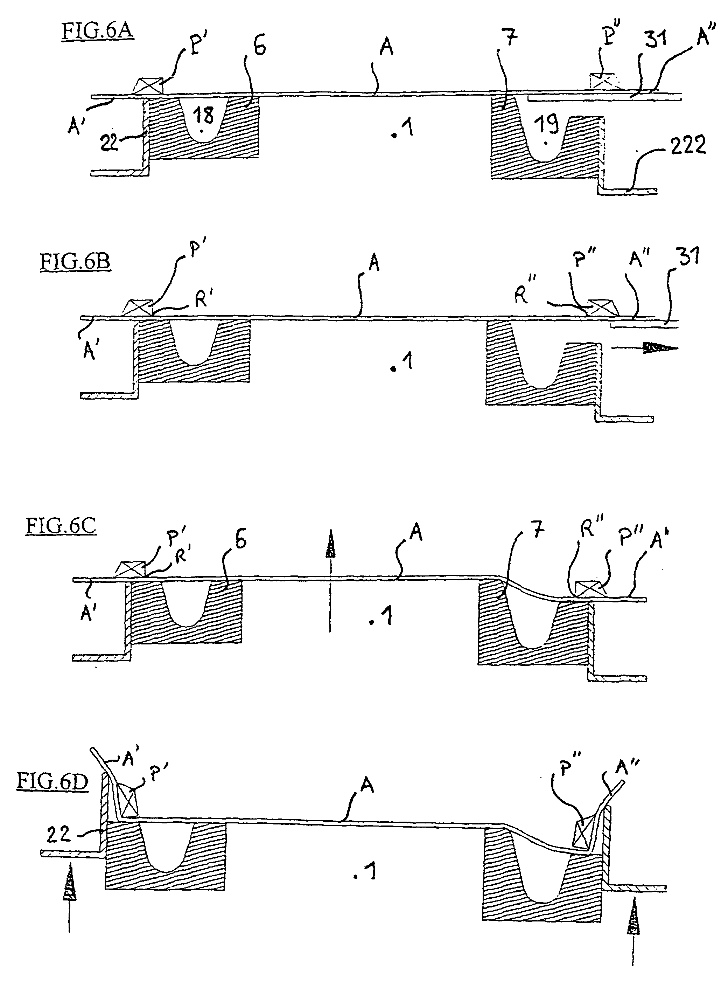

On décrira dans ce qui suit, en référence aux figures 6A à 6H et 5A à 5F, le procédé de fabrication d'un pneumatique à armature de carcasse radiale de tourisme comprenant une armature de carcasse, deux bourrelets de diamètres différents comportant au moins une tringle de renforcement et dans lesquels l'armature de carcasse forme un retournement disposé entre la tringle et l'armature de carcasse elle-même.

L'appareillage permettant la mise en oeuvre du procédé, comprend notamment le tambour 1 et des guide-tringles 50 déplaçables axialement, coaxialement à l'arbre central 2. Ces guide-tringles 50 comprennent respectivement un anneau de transfert d'une tringle grâce à des préhenseurs répartis sur sa circonférence assurant une tenue concentrique de la tringle par rapport au tambour 1.

Au départ:
- le tambour 1 est en position rétractée, les chambres d'expansion 17 étant dégonflées,
- la virole 31 est escamotée sous le premier anneau 33,
- le vérin 70 (71) est en position rentrée,
- les pions 63 (73) sont en position radiale la plus basse dans la came 58 (59) comme le montre la figure 5A,
- les dispositifs de relevage 20 sont au repos, les surfaces d'appui 221 des doigts de relevage 22 prolongeant la surface de réception 3.

En gardant les autres éléments du tambour 1 au repos, on translate la virole 31 guidée grâce au palier 40, qui vient recouvrir les éléments supports 7 et permet la création d'une surface globale de pose des produits généralement cylindrique.

On dépose alors une nappe de câbles textiles qui constitue dans l'exemple décrit ici, à elle seule l'armature de carcasse A, sur cette surface globale.

On dépose ensuite deux profilés de mélange caoutchouteux P' et P" respectivement sur les zones d'extrémité latérales A' et A" de l'armature de carcasse A, extérieurement aux positionnements axiaux des gorges de réception 18 et 19. Ces profilés P' et P" possèdent dans l'exemple décrit une section ayant la forme d'un quadrilatère mais il est clair qu'on peut envisager d'autres formes de section. Par ailleurs, afin d'avoir des profilés P' et P" suffisamment dur, on choisira de préférence un mélange caoutchouteux ayant à une viscosité Mooney ML (1+4) à 100°C mesurée selon la norme ASTM:D-1646, supérieure ou égale à 70.

Comme le montre la figure 6A, les profilés P' et P" sont déposés au-dessus des surfaces d'appui 221 des doigts de relevage 22 de chaque dispositif de relevage 20, afin de permettre le basculement desdits profilés lors du déploiement des doigts et le retournement de l'armature de carcasse A autour des points R' et R" constituant des points de changement de rigidité par rapport à l'armature de carcasse A.

On escamote la virole 31 en actionnant la bielle 39, vers le premier anneau 33 comme représenté sur la figure 6B. Notons au passage que la surface de la virole est choisie et/ou traitée pour que l'armature de carcasse A ne colle pas sur ladite surface.

On fait alors passer le tambour 1 en position intermédiaire comme on le voit sur la figure 6C, ce qui permet aux éléments supports 7 de venir au contact de l'extrémité A" de l'armature de carcasse avec une légère tension et d'avoir une tension plus importante de l'extrémité A' déposées sur les éléments supports 6 de plus grand diamètre.

Pour réaliser cette opération d'expansion du tambour 1 en position intermédiaire, on opère comme suit :
- on gonfle les chambres d'expansion 17. Celles-ci entraînant un déplacement des segments 41, 42 et 43 radialement et simultanément le déplacement des pions 63 (73) guidés dans les lumières 361 (371), dans les cames 561 (571) jusqu'à la position limite montrée à la figure 5B. Le blocage des pions 63 (73) entraînent l'arrêt du mouvement des segments du corps 10 et par conséquent défini la position intermédiaire.

En pilotant l'alimentation du vérin 70 (71) par les orifices 721 et 723 pour atteindre la position intermédiaire du vérin 70 (71), on fait tourner les couronnes 56 et 57 jusqu'à leur position représentée sur la figure 5C. L'alimentation en air des chambres d'expansion 17 peut alors être arrêtée, le tambour 1 reste néanmoins dans la position intermédiaire, les pions 63 (73) redescendants dans les lumières 361 (362) comme les montre la figure 5D. Ce mouvement reste dans la limite des jeux traditionnels entre pièces mécaniques.

Le tambour 1 restant dans la position intermédiaire, les doigts de relevage 22 sont déployés sous l'action des vérins 23. Les profilés P' et P" sont ainsi soulevés et tournent autour de leur point R' et R", et les extrémités A' et A" de l'armature de carcasse A également soulevées, ne reposant sur aucune surface, restent libres comme le montre la figure 6D.

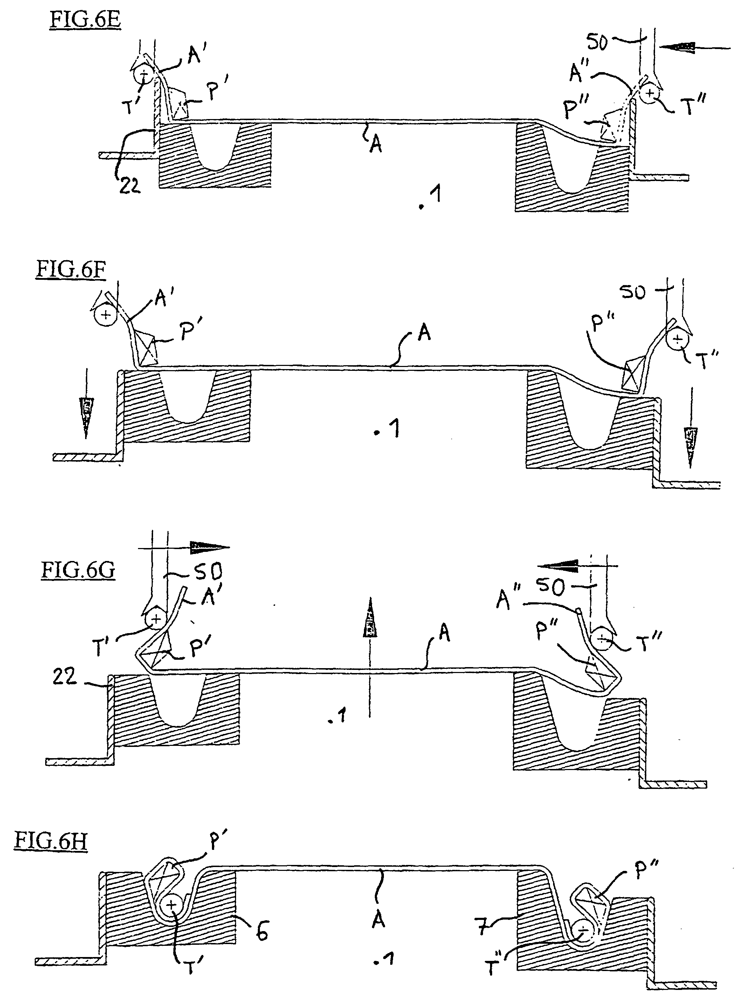

Les guide-tringles 50 portant les tringles T' et T" sont alors avancés axialement vers l'armature de carcasse A jusqu'à ce que les extrémités libres de ladite armature viennent au contact respectivement sur les tringles T' et T", comme représenté sur la figure 6E. Il s'agit dans cet exemple de tringle de type "tressée", c'est-à-dire de tringle formée d'une âme autour de laquelle sont enroulés un(des) fil(s) ou câble(s) sur une ou plusieurs couches susceptibles de tourner autour de l'âme.

Selon la figure 6F, l'alimentation des vérins d'actionnement 23 est alors arrêtée et les doigts de relevage 22 retournent en position de repos grâce à la ceinture de rappel 27, les extrémités A' et A" de l'armature de carcasse A étant alors en appui uniquement sur les tringles T' et T".

On synchronise alors l'avancée des guide-tringles 50 avec l'expansion du tambour 1 vers la position expansée, les tringles T' et T" entraînant avec elle les extrémités A' et A" de l'armature de carcasse A et réalisant les retournements qui s'effectuent autour des profilés P' et P", comme représentés sur la figure 6G.

Une fois les tringles T' et T" en position axiale correspondant à la position définitive souhaitée, on lâche les tringles et on finit l'expansion du tambour jusqu'à sa position expansée afin de fixer axialement et radialement la position des tringles, la tringle T' (T") et le profilé P' (P") venant alors se loger dans la gorge de réception 18 (19) comme on le voit clairement sur la figure 6H.

Ce deuxième gonflage du tambour 1 est obtenu par actionnement des vérins 70 et 71 des couronnes 56 et 57 qui les font tourner jusqu'à la position sortie desdits vérins correspondant à la représentation de la figure 5E. On alimente alors les chambres d'expansion 17 qui peuvent de nouveau se déployer puisque les pions 63 (73) ont une nouvelle liberté de déplacement radial jusqu'à l'atteinte de la position représentée sur la figure 5F qui correspond à la position expansée du tambour 1. Il est clair qu'il suffira de relâcher la pression des chambres d'expansion 17 et d'alimenter le vérin 70 (71) par l'orifice 721 pour ramener les couronnes 56 et 57 dans leur position angulaire représenté à la figure SA pour dégonfler le tambour.

Sans sortir du cadre de l'invention, on pourra tout à fait envisager d'autres éléments que les chambres d'expansion afin de réaliser une expansion radiale du tambour, les couronnes de commande avec le système d'assujettissement du position radiale du tambour aux positions circonférentielles des couronnes n'étant pas liées au choix de chambres d'expansion.

On pose ensuite les autres produits constitutifs du pneumatique. L'invention ne concerne pas cette partie de la fabrication. De nombreuses méthodes sont disponibles à l'homme du métier; c'est pourquoi il est inutile d'aborder cet aspect de la fabrication dans le contexte de la présente invention. Notons cependant que, dans le cas d'un procédé de fabrication en deux temps, il faut prévoir des flasques de reprise de diamètres différents sur le second tambour dit de "finition".

On procède à la vulcanisation du pneumatique pour laquelle on présente le pneumatique à la presse avec le bourrelet de plus faible diamètre en haut et on utilise, afin de tenir compte de cette asymétrie, une presse avec un plateau supérieur comportant une couronne d'appui pour le moulage du bourrelet supérieur, un dispositif similaire, escamotable équipant le plateau inférieur. On remarque, de plus, que le pneumatique est engagé en presse et démoulé sans difficulté du fait de l'asymétrie.

## Revendications

1. Tambour d'assemblage (1) expansible radialement, pour la fabrication de pneumatique, ayant un corps (10) monté sur un arbre central (2) et présentant une surface de réception (3) des produits à assembler, dont les extrémités ont des diamètres différents, **caractérisé par le fait qu'**il comporte des moyens escamotables (31) susceptibles de recouvrir l'extrémité de la surface de réception (3) de plus petit diamètre, et des moyens d'expansion (17, 56, 57) du tambour (1) vers deux positions expansées distinctes.

2. Tambour selon la revendication 1, **caractérisé par le fait que** les moyens escamotables comprennent une virole (31) montée, de façon translatable par rapport à l'arbre central (2), entre une position escamotée et une position de recouvrement de l'extrémité de la surface de réception (3) de plus petit diamètre.

3. Tambour selon l'une quelconque des revendications 1 ou 2, **caractérisé par le fait que** les moyens d'expansion comprennent au moins une couronne de commande (56, 57) concentrique à l'arbre central, montée de façon rotative par rapport à l'arbre central (2) axialement extérieurement au corps (10) du tambour (1) à proximité d'une extrémité de ce dernier, et **par le fait que** la position expansée accessible au tambour (1) est tributaire de la position angulaire de ladite couronne.

4. Tambour selon la revendication 3, **caractérisé par le fait que** l'extrémité du corps (10) porte au moins un pion d'engagement (63, 73) dans une came (561, 571) portée par la couronne de commande (56, 57).

5. Tambour selon la revendication 4, **caractérisé par le fait que** la couronne (56, 57) est montée de façon rotative par rapport à un anneau (36, 37) concentrique à l'arbre central (2) et qui porte une lumière de guidage (361, 371) coopérant avec le pion d'engagement (63, 73).

6. Tambour selon l'une quelconque des revendications 3 à 5, **caractérisé par le fait que** la couronne de commande (57) porte des éléments de guidage (40) de la virole (31).

7. Tambour selon l'une quelconque des revendications 3 à 6, **caractérisé par le fait que** le corps (10) comprend une pluralité de segments (41, 43) juxtaposés circonférentiellement autour de l'arbre central (2), et que chaque segment (41, 43) porte un pion d'engagement (63, 73) dans une came (561, 571) portée par la couronne de commande (56, 57).

8. Procédé de fabrication d'un pneumatique, **caractérisé par le fait qu'**il comporte les étapes suivantes
- utiliser une première surface ayant des extrémités de diamètres différents,
- déplacer vers ladite première surface une deuxième surface de diamètre sensiblement identique à l'extrémité de plus grand diamètre de la première surface pour recouvrir l'extrémité de plus petit diamètre de la première surface et ainsi créer une surface globale de réception généralement cylindrique,
- déposer une armature de carcasse sur ladite surface globale,
- déposer un élément annulaire métallique ou caoutchouteux respectivement sur chacune des extrémités de l'armature de carcasse,
- escamoter la deuxième surface et réaliser une expansion de la première surface vers une première position expansée dans laquelle l'extrémité de plus petit diamètre de ladite première surface vient au contact de l'armature de carcasse avec une légère tension,
- retourner chaque extrémité de l'armature de carcasse respectivement autour de l'élément annulaire correspondant et réaliser une nouvelle expansion de la première surface vers une deuxième position expansée distincte de la première.

9. Procédé selon la revendication 8, **caractérisé par le fait que** l'expansion de la première surface est supérieure ou égale à la différence de diamètre existant entre les deux extrémités de ladite première surface.

## Patentansprüche

1. Radial aufweitbare Aufbautrommel (1) für die Herstellung von Reifen, die einen Körper (10) aufweist, der auf einer mittigen Welle (2) angebracht ist und eine Aufnahmeoberfläche (3) für die zusammenzufügenden Produkte aufweist, deren Enden unterschiedliche Durchmesser aufweisen, **dadurch gekennzeichnet, daß** sie einziehbare Mittel (31), die in der Lage sind, das Ende der Aufnahmeoberfläche (3) mit kleineren Durchmesser abzudecken, sowie Aufweitungsmittel (17, 56, 57) für die Trommel (1) zu deren Aufweitung in zwei unterschiedliche, aufgeweitete Positionen aufweist.

2. Trommel nach Anspruch 1, **dadurch gekennzeichnet, daß** die einziehbaren Mittel einen Reif (31) aufweisen, der, in bezüglich der mittigen Welle (2) umsetzbarer Weise, zwischen einer eingezogenen Lage und einer Lage zur Abdeckung des Endes der Aufnahmeoberfläche (3) mit kleinerem Durchmesser angebracht ist.

3. Trommel nach irgendeinem der Ansprüche 1 oder 2, **dadurch gekennzeichnet, daß** die Aufweitungsmittel mindestens einen zur mittigen Welle konzentrischen Steuerkranz (56, 57) aufweisen, der, bezüglich der mittigen Welle (2) drehbar, axial außerhalb des Körpers (10) der Trommel (1) in Nähe eines Endes dieser angebracht ist, und daß die aufgeweitete Position, die für die Trommel (1) erreichbar ist, von der Winkellage des genannten Kranzes abhängig ist.

4. Trommel nach Anspruch 3, **dadurch gekennzeichnet, daß** das Ende des Körpers (10) mindestens einen Eingriffszapfen (63, 73) in einer Steuerkurve (561, 571) trägt, die durch den Steuerkranz (56, 57) getragen ist.

5. Trommel nach Anspruch 4, **dadurch gekennzeichnet, daß** der Kranz (56, 57) bezüglich eines Ringes (36, 37), der zur mittigen Welle (2) konzentrisch ist und eine Führungsöffnung (361, 371) trägt, die mit dem Eingriffszapfen (63, 73) zusammenwirkt, drehbar angebracht ist.

6. Trommel nach irgendeinem der Ansprüche 3 bis 5, **dadurch gekennzeichnet, daß** der Steuerkranz (57) Führungselemente (40) des Reifs (31) trägt.

7. Trommel nach irgendeinem der Ansprüche 3 bis 6, **dadurch gekennzeichnet, daß** der Körper (10) eine Vielzahl von Segmenten (41, 43) aufweist, die in Umfangsrichtung rund um die mittige Welle (2) nebeneinanderliegen, und daß jedes Segment (41, 43) einen Eingriffszapfen (63, 73) in einer Steuerkurve (561, 571) trägt, die vom Steuerkranz (56, 57) getragen ist.

8. Verfahren zur Herstellung eines Reifens, **dadurch gekennzeichnet, daß** es die folgenden Schritte aufweist:
- Verwenden einer ersten Oberfläche, die Enden mit unterschiedlichen Durchmessern aufweist,
- Versetzen einer zweiten Oberfläche mit einem Durchmesser, der im wesentlichen mit dem Ende mit größerem Durchmesser der ersten Oberfläche identisch ist, zur genannten ersten Oberfläche hin, damit das Ende mit kleinerem Durchmesser der ersten Oberfläche abgedeckt wird und so eine Gesamt-Aufnahmeoberfläche geschaffen wird, die insgesamt zylindrisch ist,
- Auflegen einer Karkassenbewehrung auf die genannte Gesamt-Oberfläche,
- Auflegen eines kreisringförmigen Elements aus Metall oder Gummi auf jeweils eines der Enden der Karkassenbewehrung,
- Einziehen der zweiten Oberfläche und Herstellen einer Aufweitung der ersten Oberfläche zu einer ersten, aufgeweiteten Position hin, in der das Ende mit größerem Durchmesser der genannten, ersten Oberfläche unter leichter Spannung in Berührung mit der Karkassenbewehrung gelangt, und
- Zurückführen eines jeden Endes der Karkassenbewehrung jeweils um das entsprechende, kreisringförmige Element herum und Verwirklichen einer neuen Aufweitung der ersten Oberfläche zu einer zweiten, aufgeweiteten Lage hin, die von der ersten unterschiedlich ist.

9. Verfahren nach Anspruch 8, **dadurch gekennzeichnet, daß** die Aufweitung der ersten Oberfläche größer ist als die Durchmesserdifferenz oder dieser gleich ist, die zwischen den beiden Enden der genannten, ersten Oberfläche vorliegt.

## Claims

1. A radially expansible assembly drum (1) for the manufacture of tyres, comprising a body (10) mounted on a central shaft (2) and presenting a receiving surface (3) for the products to be assembled, the ends of which have different diameters, **characterised by** the fact that it comprises retractable means (31) capable of covering the end of the receiving surface (3) of smaller diameter, and means of expansion (17, 56, 57) of the drum (1) to two different expanded positions.

2. A drum according to claim 1, **characterised by** the fact that the retractable means comprise a collar (31) mounted translatably relative to the central shaft (2) between a retracted position and a position covering the end of the receiving surface (3) of smaller diameter.

3. A drum according to any one of claims 1 or 2, **characterised by** the fact that the expansion means comprise at least one control crown (56, 57) concentric to the central shaft (2), mounted rotatably relative to the central shaft (2) axially outside the body (10) of the drum (2) in proximity to one end of the latter, and by the fact that the expanded position accessible to the drum (1) is controlled by the angular position of said crown.

4. A drum according to claim 3, **characterised by** the fact that the end of the body (10) bears at least one pawl (63, 73) engaging in a cam (561, 571) carried by the control crown (56, 57).

5. A drum according to claim 4, **characterised by** the fact that the crown (56, 57) is rotatably mounted relative to a ring (36, 37) concentric to the central shaft (2) and which bears a guide port (361, 371) cooperating with the engagement pawl (63, 73).

6. A drum according to any one of claims 3 to 5, **characterised by** the fact that the control crown (57) bears guiding elements (40) of the collar (31).

7. A drum according to any one of claims 3 to 6, **characterised by** the fact that the body (10) comprises a plurality of segments (41, 43) juxtaposed circumferentially around the central shaft (2), and that each segment (41, 43) bears a pawl (63, 73) engaging in a cam (561, 571) borne by the control crown (56, 57).

8. A method of manufacturing a tyre, **characterised by** the fact that it comprises the following steps:
- using a first surface having ends of different diameters;
- moving toward said first surface a second surface of substantially identical diameter at the end of greater diameter of the first surface in order to cover the end of smaller diameter of the first surface and thus create a generally cylindrical overall receiving surface;
- depositing a carcass reinforcement on said overall surface;
- depositing a metal or rubber ring-shaped element respectively on each of the ends of the carcass reinforcement;
- retracting the second surface and expanding the first surface towards a first expanded position in which the end of smaller diameter of said first surface comes into contact with the carcass reinforcement with a slight tension;
- turning up each end of the carcass reinforcement respectively around the corresponding ring-shaped element and re-expanding the first surface towards a second expanded position different from the first.

9. A method according to claim 8, **characterised by** the fact that the expansion of the first surface is greater than or equal to the difference in diameter existing between the two ends of said first surface.
